# EUROPEAN PATENT SPECIFICATION

(11) **EP 2 055 736 B1**
(45) Date of publication and mention of the grant of the patent: **18.05.2011**
(21) Application number: 07806084.5
(22) Date of filing: 20.08.2007
(51) Int. Cl.: C08L 21/00, B65D 1/40, B65D 8/02, B65D 25/34, C08L 23/00, C08L 53/02, C08L 91/06, C08L 93/04

(54) **HOTMELT COMPOSITION FOR METAL CAN AND METAL CAN UTILIZING THE SAME**
HEISSSCHMELZZUSAMMENSETZUNG FÜR METALLDOSE UND METALLDOSE DAMIT
COMPOSITION THERMOFUSIBLE POUR BOITE MÉTALLIQUE ET BOITE MÉTALLIQUE UTILISANT CETTE MÊME COMPOSITION

(30) Priority: 21.08.2006 JP 2006223843
(43) Date of publication of application: 06.05.2009
(73) Proprietor: Toyo Seikan Kaisha, Ltd., Tokyo 100-8522 (JP)
(72) Inventor: ISHIDA, Katsuhiko, Yokohama-shi, Kanagawa 2300001 (JP); UMANO, Setsuo, Yokohama-shi, Kanagawa 2300001 (JP); UCHIDA, Kensaku c/o TOYO ADL CORP., Chuo-ku, Tokyo 1048377 (JP); ISHIGURO, Hideyuki c/o TOYO ADL CORP., Chuo-ku, Tokyo 1048377 (JP); TSURUMAKI, Shinobu c/o TOYO ADL CORP., Chuo-ku, Tokyo 1048377 (JP)
(74) Representative: Manley, Nicholas Michael
(86) International application number: PCT/JP2007/066499
(87) International publication number: WO 2008/023809

(56) References cited:
- WO-A1-01/10967
- JP-A- 06 313 065
- JP-A- 10 204 414
- JP-A- 2000 119 636
- JP-A- 2002 220 494
- JP-A- 2004 203 481
- US-A- 4 900 770

## Description

### Technical Field

The present invention relates to a hot-melt composition for metal can. More specifically, the invention relates to a hot-melt composition having excellent heat resistance that can be favorably used for protecting metal edges at the time of forming a metal can and to the metal can that uses the same.

### Background Art

In recent years, there have been widely used metal cans which are threaded at their mouth-neck portions enabling caps to be screwed thereon to produce a resealing function. The metal cans having the resealing function are forming a curled portion that is wound back outward at the open edge of the mouth-neck portion.

In the metal cans having the above shape, a metal sheet of a resin-coated metal sheet constituting the metal cans is exposed at the open edge. Therefore, the metal sheet which is a steel sheet may rust due to the adhesion of water. In particular, the curled portion is forming a space inside thereof. In case water has infiltrated into the space in the curled portion, therefore, rust may occur and, besides, water containing rust may flow out, which is not desirable.

From the above point of view, therefore, attempts have been made to prevent water from infiltrating into the curled portion by forming a curable coating on a portion where the curled portion comes in contact with the outer surface of the mouth-neck portion and to prevent water from adhering on the edge of the steel sheet present in the curled portion. However, a large shearing force acts on the surface on where the coating adheres when the curled portion undergoes the deformation due to the load stemming from the tightening of a cap or due to the thermal expansion. Therefore, the curable coating is often peeled off resulting in a defective sealing.

In order to solve the above problem, JP-A-2004-203481 filed by the present applicant proposes an art of attaining the sealing by interposing a sealing material in an annular gap between the curled portion and the opposing outer surface of the mouth-neck portion, the sealing material being a rubber such as a styrene-butadiene rubber or a film such as of polypropylene (patent document 1).

### Disclosure of the Invention

According to the above prior art, even when the curled portion is deformed by the tightening of the cap, the sealing material does not peel off preventing the sealing from becoming defective. As a result, water does not infiltrate into the curled portion effectively preventing the curled portion from rusting.

When a rubber is used as the sealing material, however, it is not allowed to much increase the concentration of the solid component, usually, from the standpoint of applicability. Namely, the rubber cannot be thickly applied at one time, and it is difficult to form a sealing material maintaining excellent sealing through one time of coating. When a film is used as the sealing material, on the other hand, a complex step is required for sticking the film, hindering the productivity and, still, making it difficult to obtain satisfactory sealing.

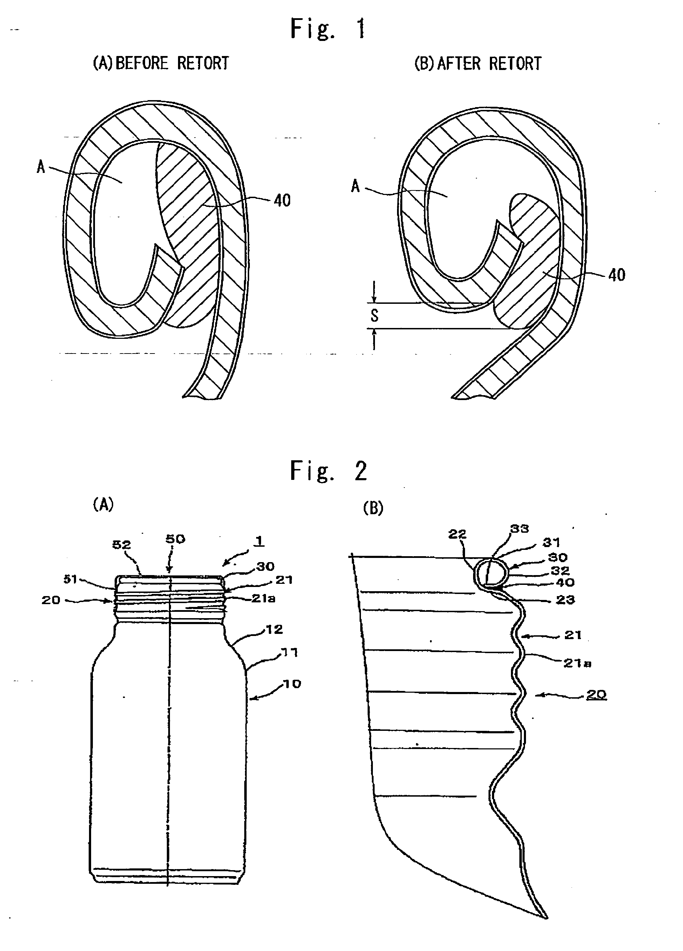

Further, it can be contrived to use a hot-melt composition as the sealing material that can be excellently applied and can be excellently produced. However, the hot-melt composition that uses a thermoplastic elastomer as the base polymer, usually, has a low softening point and unavoidably fluidizes in a region of high temperatures. Fig. 1 is a schematic diagram of a photograph showing the states of before and after the curled portion of a metal can using a conventional hot-melt composition is put to the retort sterilization. When the above ordinary hot-melt composition is used as shown in Fig. 1, the sealing material 40 expands up to an upper part in the curled portion in a state of before being put to the retort sterilization, maintaining sealing in the curled portion and sufficiently protecting the metal edge (Fig. 1(A)). When put to the retort sterilization and, particularly, placed under the conditions of retort sterilization at a high temperature in excess of 125°C, however, the sealing material 40 comprising the hot-melt composition is softened, the air A in the curled portion inflate, the sealing material is squeezed through a gap between the open edge of the mouth-neck portion and the outer surface of the mouth-neck portion (designated at S in Fig. 1(B)), arousing a problem of deteriorated sealing of the curled portion.

It is, therefore, an object of the present invention to provide a hot-melt composition for metal can which can be easily applied onto the mouth-neck portion of a metal can, which can be excellently produced, enabling a sealing material that is formed to maintain sealing even when placed under high-temperature conditions, and which has excellent heat resistance.

Another object of the present invention is to provide a metal can which effectively prevents the metal edge from rusting without permitting the sealing material to lower its sealing performance even when placed under high-temperature and wet heated conditions such as of retort sterilization.

According to the present invention, there is provided a hot-melt composition for metal can comprising a thermoplastic elastomer, a tackifier, a wax and a polyolefin resin, the wax having a softening point (R & B system) of 140 to 160°C.

In the hot-melt composition for metal can of the present invention, it is desired that:
1. The thermoplastic elastomer is a styrene block copolymer having a melt flow rate of 2 to 70 g/10 min. at a temperature of 230°C under a load of 2.16 kgf;
2. The tackifier has a softening point (R & B system) of 115 to 160°C;
3. The hot-melt composition comprises 15 to 30wt% of the thermoplastic elastomer, 20 to 65 wt% of the tackifier, 5 to 20wt% of the wax, and 15 to 35wt% of the polyolefin resin;
4. A melt flow rate is 0. 01 to 25 g/10 min. at a temperature of 130°C under a load of 5 kgf, and a flow start temperature under a load of 5 kgf is 105 to 150°C; and
5. A viscosity at 130°C is 20 to 1500 Pa · s (as measured by using a flow tester: die diameter of 0.49 mm, die length of 1 mm, load of 5 kgf), a viscosity at 190°C is 2, 000 to 10, 000 mPa · s (as measured by using a B-type viscometer, #3 rotor, 12 rpm), and a softening point (R & B system) is 140 to 160°C.

According to the present invention, further, there is provided a metal can comprising a metal can body and a mouth-neck portion protruded from the metal can body and to which a cap for resealing can be detachably attached, the open edge of the mouth-neck portion having an annular curled portion wound back outward, wherein a sealing material comprising the hot-melt composition for metal can is interposed in an annular gap where the curled portion and the outer surface of the mouth-neck portion are facing each other to attain the sealing.

In the metal can of the invention, it is desired that the sealing material is applied onto the outer surface of the mouth-neck portion in an amount of 50 to 70 mg/cm².

Owing to-its excellent heat resistance,-the hot-melt composition for metal can of the present invention effectively prevents the occurrence of squeezing and, therefore, maintains excellent sealing performance even when it is used as a sealing material for metal can that is put to the retort sterilization.

Further, since it remains solid at normal temperature, the hot-melt composition of the invention can be thickly applied even onto such a portion as the curled portion formed at the mouth-neck portion of the metal can having a resealing function, making it possible to form a sealing material having excellent sealing performance maintaining good applicability and featuring excellent productivity.

With the metal can using the hot-melt composition for metal can for protecting the edge of the curled portion, further, excellent sealing is obtained between the curled portion and the outer surface of the mouth-neck portion even when the metal can is placed under high-temperature and wet heated conditions such as of retort sterilization. Therefore, water does not infiltrate into the curled portion, and the metal edge is effectively prevented from rusting.

In addition to being used as a sealing material for the curled portion of the metal can having the resealing function, the hot-melt composition for metal can of the invention can be further effectively used as a sealing material for a portion where a mountain cup and a can body of an aerosol can are wrap-seamed together or can be used as a member for preventing rust at the seam portions of welded cans.

The hot-melt composition for metal can of the invention is a conventional hot-melt composition comprising a thermoplastic elastomer, a tackifier, a wax and a polyolefin resin, but an important feature resides in that the wax has a softening point (R & B system) in a range of 140 to 160°C.

There has heretofore been known a hot-melt composition capable of forming a sealing material blended with a tackifier and a wax and using a thermoplastic elastomer as a base polymer. According to the present invention, however, the hot-melt composition for metal can contains a wax which, particularly, has a softening point (R & B system) in a range of 140 to 160°C, featuring excellent applicability to metal cans, realizing excellent heat resistance, without arousing a problem of decreased sealing caused by the squeezing of the sealing material of the hot-melt composition, and completely preventing the rusting.

The retort sterilization is conducted under the conditions that vary depending upon the kind of the content contained in the metal can and the amount thereof and is, generally, conducted in a temperature range of 90 to 120°C. When the sterilization at a particularly high temperature is required, however, the retort sterilization is conducted in a temperature range of 120 to 125°C while suitably adjusting the time.

The hot-melt composition for metal can of the invention has a melt flow rate (MFR) of 0. 01 to 25 g/10 min. at a temperature of 130°C under a load of 5 kgf and a flow start temperature in a range of 105 to 150°C under a load of 5 kgf. Even when put to the retort sterilization, therefore, the hot-melt composition for metal can of the invention is not squeezed and maintains the sealing as a sealing material.

That is, even when heated at 125°C which is a temperature in the high-temperature retort sterilization, the sealing material is suppressed from being fluidized, and the sealing material is effectively prevented from being squeezed as described above.

Further, the hot-melt composition for metal can of the invention has a viscosity at 130°C of 20 to 1500 Pa · s (as measured by using a flow tester: die diameter of 0.49 mm, die length of 1 mm, load of 5 kgf), a viscosity at 190°C of 2,000 to 10,000 mPa · s (B-type viscometer, #3 rotor, 12 rpm), a softening point (R & B system) in a range of 140 to 160°C and, therefore, exhibits excellent heat resistance, is not squeezed even when put to the retort sterilization at high temperatures, can be excellently applied, and is capable of forming the sealing material maintaining good productivity when it is applied to the curled portions of metal cans having a resealing function.

The above actions and effects of the invention will become obvious from the results of Examples described later.

That is, the sealing material comprising the hot-melt composition for metal can of the invention has a viscosity at 190°C of 2,000 to 10,000 mPa·s, can be excellently applied, is not squeezed even when it is put to the retort sterilization at 125°C x 30 minutes, and the curled portion maintains the sealing (Examples1 to 11).

When a polymethylene wax having a softening point of 108°C is used, on the other hand, the sealing material is squeezed not only through the retort sterilization at a high temperature but also through the ordinary retort (Comparative Example 1) .

Further, the hot-melt composition for metal can which is blended with no polyolefin resin exhibits poor adhesiveness and poor flexibility, and cannot form the sealing material on the curled portion maintaining good productivity (Comparative Example 2).

### Brief Description of the Drawings

Fig-.- 1 is a schematic diagram of a photograph showing the states of before and after the curled portion using a conventional hot-melt composition is put to the retort sterilization.
Fig. 2 includes a side view of a metal can of the present invention and a sectional view illustrating a portion of a mouth-neck portion on an enlarged scale.
Fig. 3 is a view illustrating the steps of curling the mouth-neck portion of the metal can shown in Fig. 2.

### Best Mode for Carrying Out the Invention

### (Thermoplastic Elastomers)

The thermoplastic elastomer in the hot-melt composition for metal can of the present invention serves as a base polymer of the hot-melt composition for metal can.

As the thermoplastic elastomer, there can be, usually, used an SIS (styrene/isoprene/styrene block copolymer) called SIS type thermoplastic elastomer, an SBS (styrene/butadiene/styrene block copolymer) called SBS type thermoplastic elastomer, an SEBS (styrene/ethylene/butylene/styrene block copolymer) called SEBS type thermoplastic elastomer which is a hydrogen adduct of the SBS type thermoplastic elastomer, and an SEPS (styrene/ethylene/propylene/styrene copolymer).

Among them, the SEBS type thermoplastic elastomers (SEBS, SEPS) are particularly preferred from the standpoint of thermal stability and compatibility with other components.

It is desired that the thermoplastic elastomer has a melt flow rate in a range of 2 to 70 g/10 minutes at a temperature of 230°C under a load of 2.16 kgf from the standpoint of applicability.

It is desired that the thermoplastic elastomer is blended in the hot-melt composition for metal can of the invention in an amount in a range of 15 to 30wt% and, particularly, 18 to 24wt%. If the blended amount of the thermoplastic elastomer is less than 15wt%, the hot-melt composition for metal can lacks softness, exhibits poor heat resistance, and is little prevented from being squeezed at the time of retort sterilization. If the blended amount thereof exceeds 30wt%, on the other hand, the hot-melt composition for metal can is poorly fluidized at the time of being heat-melted, and cannot be favorably applied.

### (Tackifiers)

The hot-melt composition for metal can of the invention is blended with a tackifier in order to plasticize the above thermoplastic elastomer and to improve the adhesiveness of the hot-melt composition for metal can.

It is desired that the tackifier used for the hot-melt composition for metal can of the invention has a softening point (in compliance with the method of testing softening points of hot-melt adhesives, R & B system: JIS K 6863), particularly, in a range of 115 to 160°C in order to prevent the squeezing when put to the retort sterilization.

As the tackifier, there can be exemplified rosin type tackifier, terpene type tackifier and petroleum type tackifier. As the rosin type tackifier, there can be exemplified natural rosin, polymerized rosin and derivatives thereof (hydrogenated rosin, disproportionated rosin, polymerized rosin, acrylic acid-modified rosin, fumaric acid-modified rosin, maleic acid-modified rosin and rosin esters thereof (esterified rosins such as of alcohol, glycerin and pentaerythritol). As the terpene type one, there can be exemplified terpene (α-pinene, β-pinene) type ones, terpene phenol type ones and derivatives thereof (aromatic modified terpene resin, hydrogenated terpene resin). As the petroleum type tackifier, there can be exemplified aliphatic petroleum resin, aromatic petroleum resin, copolymer type petroleum resin, alicyclic petroleum resin, chroman-indene resin, styrene type resin and phenol resin.

Among the above tackifiers, it is particularly desired in the present invention to use the terpene type tackifier and the petroleum type tackifier. If appearance such as hue of good quality is taken into account, it is more desired to use the above tackifiers that have been hydrogenated.

It is desired that the tackifier is blended in an amount of 20 to 65wt% and, particularly, 30 to 50wt%. If the blended amount of the tackifier is less than 20wt%, the adhesiveness and the softness decrease. If the blended amount thereof exceeds 65wt%, on the other hand, the effect for preventing the squeezing decreases at the time of retort sterilization, which is not desirable.

### (Waxes)

It is important that the wax used for the hot-melt composition for metal can of the invention has a softening point of 140 to 160°C (in compliance with the method of testing softening points of hot-melt adhesives, R & B system: JIS K 6863) . This elevates the softening point of the hot-melt composition for metal can as a whole imparting heat resistance to be capable of withstanding the retort sterilization.

If the softening point of the wax is lower than 140°C, the effect for preventing the squeezing is low at the time of retort sterilization. If it exceeds 160°C, on the other hand, a high temperature is required for melting, deteriorating the productivity. Therefore neither case is practicable.

As the wax having a softening point in the above range that can be used in the invention, there can be exemplified polyethylene wax, polypropylene wax, fatty acid, fatty acid glyceride, waxes obtained by oxidizing them, ethylene/acrylic acid copolymer wax and ethylene/methacrylic acid copolymer wax. Among the above waxes, the polypropylene wax is particularly desired from the standpoint of high softening point that withstands the retort sterilization at high temperatures.

It is desired that the wax used for the hot-melt composition for metal can of the invention, usually, has a molecular weight of 5, 000 to 30, 000 and a viscosity of not larger than 4,000 mPa · s at a temperature of 170°C.

The blended amount of the wax is desirably in a range of 5 to 20wt% and, particularly, 10 to 15wt%. If the blended amount of wax is less than 5wt%, it is not allowed to impart the heat resistance to withstand the retort sterilization. If the blended amount thereof exceeds 20wt%, on the other hand, the adhesiveness and the softness decrease, which is not desirable.

### (Polyolefin resin)

The hot-melt composition for metal can of the invention is blended with a polyolefin resin from the standpoint of adjusting the viscosity of the hot-melt composition for metal can, for imparting softness thereto, for improving the heat resistance, and for effectively preventing the squeezing when put to the retort sterilization.

The polyolefin resin exhibits the action which is the same as that of the thermoplastic elastomer. When the thermoplastic elastomer only is used, however, the viscosity becomes too high deteriorating the sealing and applicability. Therefore, the hardness of the sealing material formed by the hot-melt composition for metal can is adjusted by being blended with the polyolefin resin.

As the polyolefin resin, there can be exemplified a thermoplastic polyolefin having an atactic structure and, preferably, the amorphous one. Concrete-examples -include amorphous poly α-olefins (propylene homopolymer, propylene/ethylene copolymer, propylene/butene copolymer, propylene/ethylene/butene terpolymer), and atactic polypropylene. Among them, the propylene homopolymer can be preferably used from the standpoint of softening point.

The polyolefin resin is blended in an amount of 15 to 35wt%. If the blended amount thereof is less than 15wt%, the softness and the effect for preventing the squeezing at the time of retort decrease. If the blended amount thereof exceeds 35wt%, the fluidity becomes poor at the time of heat-melting and the productivity decreases.

### (Others)

The hot-melt composition for metal can of the invention may use a mineral oil to assist the effect of the tackifier. As the mineral oil, there can be exemplified paraffin type oil, naphthene type oil or aroma type oil.

The blended amount of the mineral oil is in a range of, preferably, 0 to 20wt% and, particularly, 0 to 10wt%.

As required, further, the hot-melt composition for metal can of the invention may be blended with various kinds of additives such as antioxidant, ultraviolet-ray absorber, filler, coloring agent, etc. at customarily employed blending ratios.

### (Metal cans)

Fig. 2 includes a side view (A) of a metal can of the present invention and a sectional view (B) illustrating a portion of a mouth-neck portion on an enlarged scale. As shown in Fig. 2, the metal can of the present invention includes a metal can body 10, and a metal mouth-neck portion 20 which protrudes from the metal can body 10 and to which a cap 50 for resealing can be detachably attached. An annular curled portion 30 is formed at an open edge of the mouth-neck portion 20 and is wound back outward. Here, a feature resides in that a sealing material 40 comprising the hot-melt composition for metal can of the invention is interposed in an annular gap between the curled portion 30 and the outer surface of the mouth-neck portion 20.

The metal can body 10 includes a cylindrical body portion 11 with bottom, and a shoulder portion 12 that is tilted inward toward the upper side from the upper end of the body portion 11. The mouth-neck portion 20 protrudes from the shoulder portion 12, and the metal can body 10 and the mouth-neck portion 20 are of a structure that is integrally formed from a piece of blank by draw-forming.

The mouth-neck portion 20 includes a threaded cylindrical portion 21 of a large diameter forming an external thread 21a, an open cylindrical portion 22 drawn into a diameter which is smaller by one step from the upper end of the threaded cylindrical portion 21, and a step portion 23 for coupling the threaded cylindrical portion 21 and the open cylindrical portion 22 together. The step portion 23 is forming a tilted wall that is tilted at a predetermined angle downward from the lower end of the open cylindrical portion.

The curled portion 30 includes an upper curved portion 31 that is curved upward in a convex shape from the upper end of the open cylindrical portion outward in the radial direction, and a lower curved portion 32 that is curved downward in a convex shape from the outer end of the upper curved portion 31 inward in the radial direction. The upper curved portion 31 is a semicircular shape, the lower curved portion 32 is of a quarter arcuate shape, and a portion from a middle position of the lower curved portion 32 to an end (inner diametrical end) thereof is facing the step portion 23 maintaining a predetermined gap.

In the embodiment shown in Fig. 2, the sealing material 40 is interposed in the annular gap between the lower curved portion 32 of the curled portion 30 and the step portion 23. Further, a cut end surface 33 where the metal surface exposes at the inner diametrical end of the lower curved portion 32, is positioned by the sealing material 40 and is covered by the sealing material 40.

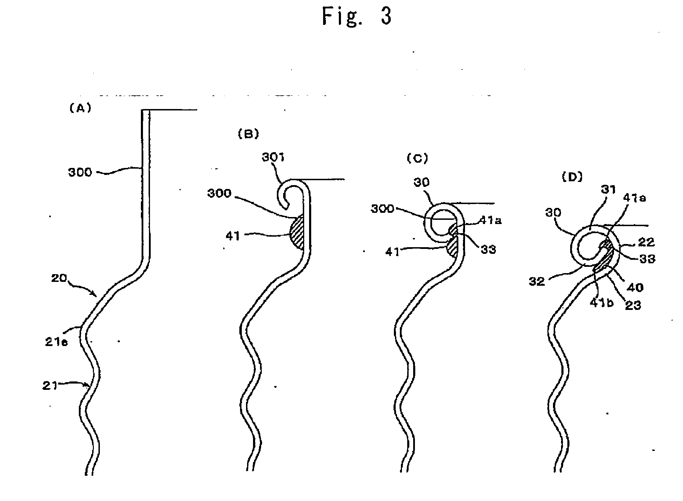

There is no limitation on the method of forming the curled portion of the metal can of the invention by using the hot-melt composition for metal can of the invention. However, the curled portion can be favorably formed by a method according to which, as shown in Fig. 3, an initial curl (1st curl) is formed and, thereafter, the hot-melt composition 41 for metal can of the invention is mounted on a predetermined portion.

That is, Fig. 3(A) illustrates a state of before the curling step where the curled portion is formed, and Fig. 3(B) illustrates a state where the initial curl is formed. In the embodiment that is shown, the initial curl portion 301 is of a shape which, in cross section, is curved up to about a three-fourths arc beyond a semicircle.

In the state where the initial curl is formed, the hot-melt composition 41 for metal can that becomes the sealing material 40 is annularly adhered to a predetermined portion of a curl-forming cylindrical portion 300. In the subsequent curling steps (see Figs. 3(C), (D)), the hot-melt composition 41 for metal can is deformed being involved in the curled portion 30. Referring to Fig. 3(C), a portion 41a of the hot-melt composition 41 for metal can fills in the curled portion 30 in a state of covering the cut end surface 33 of the curled portion 30, and the remaining portion 41b that does not enter into the curled portion 30 assumes a shape being left from the outer periphery of the open cylindrical portion 22 through up to the outer surface of the step portion 23 (see Fig. 3(D)).

The sealing range after the curl is formed can be adjusted relying upon the amount of adhering the hot-melt composition 41 for metal can and the position of adhesion. It is, however, desired that the sealing material comprising the hot-melt composition for metal can of the invention is applied onto the outer surface of the mouth-neck portion in an amount of 50 to 70 mg/cm². If the amount of application is smaller than the above range, it becomes difficult to maintain a sufficient degree of sealing. Even if the amount of application is larger than the above range, the sealing is no further improved, which is disadvantageous in economy.

According to this method, the sealing may be attained by press-contacting the end of the curled portion 30 onto the sealing material 40 in the curling steps (Figs. 3(C), (D)) without involving the hot-melt composition 41 for metal can.

This method makes it possible to correctly set the end position of the curled portion 30 and the position of the hot-melt composition 41 for metal can, to maintain excellent sealing compounded by the use of the hot-melt composition for metal can of the invention, and to effectively prevent water from infiltrating into the curled portion and rust at the metal edges.

As the metal can of the invention, there can be used various kinds of resin-coated metal sheets that have heretofore been used for the metal cans.

As the metal sheet, there can be used various surface-treated steel sheets and light metal sheets such as of aluminum. Here, however, the metal can of the invention effectively prevents water from adhering on the metal edges. Therefore, steel sheets that may rust can be particularly effectively used. The surface-treated steel sheet may be the one obtained by annealing a cold-rolled steel sheet followed by the secondary cold rolling and effecting one or two or more kinds of surface treatments such as zinc plating, tin plating, nickel plating, electrolytic chromate treatment and chromate treatment. As the resin coating, a thermoplastic polyester resin can be preferably used.

### EXAMPLES

The invention will now be concretely described.

### (Method of preparing hot-melt compositions for metal can)

Tackifiers and mineral oil shown in Tables 1 and 2 were introduced into a stainless steel beaker equipped with a stirrer, and were heated. The heating was carefully conducted so that the content was not heated to be not less than 180°C. After melted, stirring was effected until homogeneity was attained. Next, a thermoplastic elastomer was gradually added thereto. Finally, the wax and polyolefin resin were added to prepare hot-melt compositions for metal can.

### (Evaluation of hot-melt compositions for metal can)

### (1) Softening point.

The softening point was measured by a softening point testing method relying on the ring and ball test in compliance with the JIS (Japan Industrial Standard) K 6863-1944.

### (2) Method of measuring the viscosity at 190°C)

The viscosity at 190°C was measured in compliance with the JIS K 6862 (Method A) . 300 Grams of the hot-melt composition for metal can melted in advance at about 200°C was introduced into a test container, stirred sufficiently with a bar thermometer in the open air and, when the temperature was 190°C, the viscosity was measured by using a B-type viscometer (TOKIMEC VISCOMETER, MODEL: BM, manufactured by Tohki Sangyo Co.)(a suitable rotor was used as required).

### (3) Method of measuring the viscosity at 130°C and the MFR at 130°C)

The viscosity at 130°C and the MFR at 130°C were measured by using a flow tester, CFT500C, manufactured by Shimazu Seisakusho Co. The-hot-melt composition for metal can melted at 180°C was flown into a predetermined mold to prepare a cylindrical formed article having a length of 20 mm and a diameter of 10 mm, and was measured by a constant-temperature method by being set to the flow tester, CFT500C, under the conditions of 130°C, a load of 5 kgf, a die diameter of 0.49 mm and a die length of 1 mm.

### (4) Method of measuring the flow start temperature.

The flow start temperature was measured by using the flow tester, CFT500C, manufactured by Shimazu Seisakusho Co. The hot-melt composition for metal can melted at 180°C was flown into a predetermined mold to prepare a cylindrical formed article having a length of 20 mm and a diameter of 10 mm, and was measured by a heat-up method by being set to the flow tester, CFT500C, under the conditions of a start temperature of 80°C, rate of temperature rise of 5°C/min., a load of 5 kgf, a die diameter of 1 mm and a die length of 10 mm. (5) Evaluating the squeezing after the retort.

The hot-melt composition for metal can was applied onto the outer surface of the mouth-neck portion in an amount of 50 to 70 mg/cm² and was curled. Next, after the retort sterilization at 125°C x 30 minutes, the metal can as a whole was observed. The evaluation was ⊚ when no squeezing was formed, O when the length of squeezing was not longer than 0.5 mm, and X when the length of squeezing was not shorter than 0.5 mm (see Fig. 1(B)).

### (6) Method of testing the sealing.

The hot-melt composition for metal can was applied like beads onto the metal cans at 190°C in an amount of 0.8 g/m, and was peeled off by fingers to measure the peeling. The evaluation was ⊚ when not peeled off at all, O when partly peeled off, and X when the film was completely peeled off without being left.

### (7) Method of testing the softness.

The hot-melt composition for metal can was flown into a metal frame having a side of a_length of 100 mm on the inner side thereof and a thickness of 1 mm in a manner that it was not overflown, solidified, and a film of a thickness of 1 mm was obtained by using a hydraulic press machine. The film was left to stand in an atmosphere of 0°C for 2 hours or longer, and was folded into two to make sure the occurrence of cracking in the film. The evaluation was ⊚ when the film was not cracked or broken, O when the film was cracked but was not broken, and X when the film was broken.

**Table 1**

| | | Ex. 1 | Ex. 2 | Ex. 3 | Ex. 4 | Ex. 5 | Ex. 6 | Ex. 7 |
|---|---|---|---|---|---|---|---|---|
| Thermoplastic elastomer | | | | | | | | |
| | H-1 | 20 | 20 | | | 20 | 20 | 20 |
| | H-2 | | | 30 | | | | |
| | H-3 | | | | 20 | | | |
| | | | | | | | | |
| Tackifier resin | | | | | | | | |
| | TF-1 | 20 | 20 | 10 | 20 | | | |
| | TF-2 | 20 | 20 | 15 | 20 | | | |
| | TF-3 | | | | | 40 | | |
| | TF-4 | | | | | | 50 | |
| | TF-5 | | | | | | | 40 |
| | | | | | | | | |
| Wax | | | | | | | | |
| | W-1 | | 10 | | | | | |
| | W-2 | 10 | | 15 | 10 | 10 | 10 | 10 |
| | | | | | | | | |
| Polyolefin resin | | | | | | | | |
| | AP-1 | 20 | 20 | 20 | 20 | 20 | 20 | 20 |
| | | | | | | | | |
| Mineral oil | | | | | | | | |
| | O-1 | 10 | 10 | 10 | 10 | 10 | | 10 |
| | | | | | | | | |
| Total | | 100 | 100 | 100 | 100 | 100 | 100 | 100 |

| Test items | | | | | | | | |
|---|---|---|---|---|---|---|---|---|
| | Softening point [°C] | 145.0 | 140.0 | 142.0 | 141.0 | 144.0 | 144.0 | 145.5 |
| | 190°C viscosity [mPa·s] | 2,960 | 2,150 | 4,800 | 2,300 | 3,600 | 8,800 | 3,650 |
| | 130°C viscosity [Pa·s] | 73 | 21 | 55 | 24 | 130 | 234 | 167 |
| | 130°C MFR [g/10min] | 5.678 | 20.204 | 7.567 | 17.342 | 3.202 | 1.780 | 2.500 |
| | Flow start temp. [°C] | 112 | 105 | 108 | 111 | 127 | 134 | 128 |
| | Squeeze after retort | ○ | ○ | ○ | ○ | ⊚ | ⊚ | ⊚ |
| | Sealing | ⊚ | ⊚ | ⊚ | ⊚ | ⊚ | ○ | ⊚ |
| | Softness | ⊚ | ⊚ | ⊚ | ⊚ | ⊚ | ○ | ⊚ |

**Table 2**

| | | Ex. 8 | Ex. 9 | Ex. 10 | Ex. 11 | Comp. Ex. 1 | Comp. Ex. 2 |
|---|---|---|---|---|---|---|---|
| Thermoplastic elastomer | | | | | | | |
| | H-1 | 20 | 20 | 20 | 20 | 20 | 20 |
| | | | | | | | |
| Tackifier resin | | | | | | | |
| | TF-1 | | | | | 20 | 25 |
| | TF-2 | | | | | 20 | 25 |
| | TF-3 | | | | 50 | | |
| | TF-6 | 40 | | | | | |
| | TF-7 | | 40 | | | | |
| | TF-8 | | | 40 | | | |
| | | | | | | | |
| Wax | | | | | | | |
| | W-2 | 10 | 10 | 10 | 10 | | 20 |
| | W-3 | | | | | 10 | |
| | | | | | | | |
| Polyolefin resin | | | | | | | |
| | AP-1 | 20 | 20 | 20 | 20 | 20 | |
| | | | | | | | |
| Mineral oil | | | | | | | |
| | O-1 | 10 | 10 | 10 | | 10 | 10 |
| | | | | | | | |
| Total | | 100 | 100 | 100 | 100 | 100 | 100 |
| Test items | | | | | | | |
| | Softening point [°C] | 145.0 | 145.0 | 143.5 | 144.0 | 133.0 | 139.0 |
| | 190°C viscosity [mPa·s] | 2,570 | 3,270 | 3,070 | 8,050 | 1,950 | 1,960 |
| | 130°C viscosity [Pa.s] | 116 | 96 | 88 | 767 | 32 | 45 |
| | 130°C MFR [g/10min] | 3.579 | 4.335 | 4.713 | 0.543 | 13.006 | 9.249 |
| | Flow start temp. [°C] | 120 | 121 | 120 | 135 | 91 | 105 |
| | Squeeze after retort | ○ | ○ | ○ | ⊚ | × | ○ |
| | Sealing | ⊚ | ⊚ | ⊚ | ○ | ⊚ | × |
| | Softness | ⊚ | ⊚ | ⊚ | ○ | ⊚ | × |

Described below are the details of the thermoplastic elastomers, tackifiers, waxes, polyolefin resin and mineral oil shown in Tables 1 and 2.

### [Thermoplastic elastomers]

H-1: SEPS (MFR, 230°C, 2.16 kg, 7 g/10 min · styrene amount 13%)
H-2: SEPS (MFR, 230°C, 2.16 kg, 70 g/10 min · styrene amount 30%)
H-3: SEPS (MFR, 230°C, 2.16 kg, 10 g/10 min · styrene amount 29%) [Tackifiers]
TF-1: Alicyclic petroleum resin (softening point, 115°C, completely hydrogenated)
TF-2: Alicyclic petroleum resin (softening point, 115°C, partly hydrogenated)
TF-3: Aliphatic/alicyclic petroleum resin (softening point, 140°C, completely hydrogenated)
TF-4: Aliphatic/alicyclic petroleum resin (softening point, 135°C, partly hydrogenated)
TF-5: Terpene resin (softening point, 150°C, completely hydrogenated)
TF-6: Aliphatic petroleum resin (softening point, 130°C, completely hydrogenated)
TF-7: Aliphatic petroleum resin (softening point, 130°C, partly hydrogenated, low hydrogenation ratio)
TF-8: DCPD petroleum resin (softening point, 140°C, completely hydrogenated)

### [Waxes]

W-1: Polypropylene wax (softening point, 148°C)
W-2: Polypropylene wax (softening point, 156°C)
W-3: Polymethylene wax (softening point, 108°C)

### [Polyolefin resin]

AP-1: Propylene homo polymer (viscosity, 2300 mPa·s/190°C)

### [Mineral oil]

O-1: Fluidized paraffin

## Claims

1. A hot-melt composition for metal can comprising a thermoplastic elastomer, a tackifier, a wax and a polyolefin resin, said wax having a softening point (R & B system) of 140 to 160°C.

2. The hot-melt composition for metal can according to claim 1, wherein said thermoplastic elastomer is a styrene block copolymer having a melt flow rate of 2 to 70 g/10 min. at a temperature of 230°C under a load of 2.16 kgf.

3. The hot-melt composition for metal can according to claim 1, wherein said tackifier has a softening point (R & B system) of 115 to 160°C.

4. The hot-melt composition for metal can according to claim 1, which comprises 15 to 30wt% of the thermoplastic elastomer, 20 to 65 wt% of the tackifier, 5 to 20wt% of the wax, and 15 to 35wt% of the polyolefin resin.

5. The hot-melt composition for metal can according to claim 1, wherein a melt flow rate is 0.01 to 25 g/10 min. at a temperature of 130°C under a load of 5 kgf, and a flow start temperature under a load of 5 kgf is 105 to 150°C.

6. The hot-melt composition for metal can according to claim 1, wherein a viscosity at 130°C is 20 to 1, 500 Pa · s (as measured by using a flow tester: die diameter of 0.49 mm, die length of 1 mm, load of 5 kgf), a viscosity at 190°C is 2,000 to 10,000 mPa · s (as measured by using a B-type viscometer, #3 rotor, 12 rpm), and a softening point (R & B system) is 140 to 160°C.

7. A metal can comprising a metal can body and a mouth-neck portion protruded from said metal can body and to which a cap for resealing can be detachably attached, the open edge of said mouth-neck portion having an annular curled portion wound back outward, wherein a sealing material comprising the hot-melt composition for metal can of claim 1 is interposed in an annular gap where said curled portion and the outer surface of the mouth-neck portion are facing each other to attain the sealing.

8. The metal can according to claim 7, wherein said sealing material is applied onto the outer surface of the mouth-neck portion in an amount of 50 to 70 mg/cm².

## Patentansprüche

1. Heißschmelz-Zusammensetzung für Metalldosen, die ein thermoplastisches Elastomer, einen Klebrigmacher, ein Wachs und ein Polyolefinharz umfasst, wobei genanntes Wachs einen Erweichungspunkt (R & B System) von 140 bis 160°C hat.

2. Heißsehmelz-Zusammensetzung für Metalldosen nach Anspruch 1, worin genanntes thermoplastisches Elastomer ein Styrol-Block-Copolymer ist, das eine Schmelzflussrate von 2 bis 70 g/10 Min. bei einer Temperatur von 230°C unter einer Belastung von 2,16 kgf hat.

3. Heißschmelz-Zusammensetzung für Metalldosen nach Anspruch 1, worin genannter Klebrigmacher einen Erweichungspunkt (R & B System) von 115 bis 160°C hat.

4. Heißschmelz-Zusammensetzung für Metalldosen nach Anspruch 1, die 15 bis 30 Gew.-% des thermoplastischen Elastomers, 20 bis 65 Gew.-% des Klebrigmachers, 5 bis 20 Gew.-% des Wachses und 15 bis 35 Gew.-% des Polyolefinharzes umfasst.

5. Heißschmelz-Zusamnensetzung für Metalldosen nach Anspruch 1, worin eine Schmelzflussrate 0,01 bis 25 g/10 Min. bei einer Temperatur von 130°C unter einer Belastung von 5 kgf beträgt und eine Flussstarttemperatur unter einer Belastung von 5 kgf 105 bis 150°C beträgt.

6. Heißschmelz-Zusammensetzung für Metalldosen nach Anspruch 1, worin eine Viskosität bei 130°C 20 bis 1 500 Pa·s beträgt (wie unter Verwendung eines Fließprüfgerätes gemessen wurde: Düsendurchmesser 0,49 mm, Düsenlänge 1 mm, Belastung 5 kgf), eine Viskosität bei 190°C 2 000 bis 10 000 mPa·s beträgt (wie unter Verwendung eines Viskosimeters B-Typ gemessen wurde, Rotor Nr. 3, 12 rpm) und ein Erweichungspunkt (R & B System) 140 bis 160°C beträgt.

7. Metalldose, die einen Metalldosenkörper und einen Mündung-Hals-Bereich, der aus dem genannten Metalldosenkörper herausragt und auf den zum Wiederverschließen ein Deckel abnehmbar befestigt werden kann, umfasst, wobei der offene Rand des genannten Mündung-Hals-Bereiches einen ringförmigen eingerollten Bereich hat, der nach außen zurückgebogen ist, worin ein Abdichtungsmaterial, das die Heißschmelz-zusammensetzung für Metalldosen nach Anspruch 1 umfasst, in eine ringförmige Lücke eingefügt ist, wo genannter eingerollter Bereich und die äußere Oberftläche des Mündung-Hals-Bereiches aufeinander treffen, um das Abdichten zu erzielen.

8. Metalldose nach Anspruch 7, worin genanntes Abdichtungsmaterial auf die äußere Oberfläche des Mündung-Hals-Bereiches in einer Menge von 50 bis 70 mg/cm² aufgetragen ist.

## Revendications

1. Composition thermofusible pour bidon métallique, comprenant un élastomère thermoplastique, un agent poisseux, une cire et une résine polyoléfinique, ladite cire ayant un point de ramollissement (système R&B) allant de 140 à 160°C.

2. Composition thermofusible pour bidon métallique selon la revendication 1, dans laquelle ledit élastomère thermoplastique est un copolymère bloc de styrène ayant un indice de fluidité allant de 2 à 70 g/10 min à une température de 230°C sous une charge de 2,16 kgf.

3. Composition thermofusible pour bidon métallique selon la revendication 1, dans laquelle ledit agent poisseux possède un point de ramollissement (système R&B) allant de 115 à 160°C.

4. Composition thermofusible pour bidon métallique selon la revendication 1, comprenant de 15 à 30% en poids d'élastomère thermoplastique, de 20 à 65% en poids d'agent poisseux, de 5 à 20% en poids de cire, et de 15 à 35% en poids de résine polyoléfinique.

5. Composition thermofusible pour bidon métallique selon la revendication 1, dans laquelle un indice de fluidité va de 0,01 à 25 g/10 min à une température de 130°C sous une charge de 5 kgf, et une température de début d'écoulement sous une charge de 5 kgf va de 105 à 150°C.

6. Composition thermofusible pour bidon métallique selon la revendication 1, dans laquelle une viscosité à 130°C va de 20 à 1500 Pa·s (tel que mesuré à l'aide d'un appareil de test d'écoulement : diamètre de filière de 0,49 mm, longueur de filière de 1 mm, charge de 5 kgf), une viscosité à 190°C va de 2000 à 10 000 mPa·s (tel que mesuré à l'aide d'un viscosimètre de type B, rotor n°3, 12 tours/min), et un point de ramollissement (système R&B) va de 140 à 160°C.

7. Bidon métallique comprenant un corps de bidon métallique et une portion d'embouchure-col dépassant dudit corps de bidon métallique et à laquelle un capuchon de fermeture étanche peut être fixé de manière détachable, le bord ouvert de ladite portion d'embouchure-col ayant une portion recourbée annulaire enroulée vers l'extérieur, où un matériau de fermeture étanche comprenant la composition thermofusible pour bidon métallique selon la revendication 1 est intercalée dans un espace annulaire où ladite portion recourbée et la surface externe de la portion d'embouchure-col se font face pour obtenir la fermeture étanche.

8. Bidon métallique selon la revendication 7, dans lequel ledit matériau de fermeture étanche est appliqué à la surface externe de la portion d'embouchure-col en une quantité allant de 50 à 70 mg/cm².
